# EUROPÄISCHE PATENTSCHRIFT

(11) **EP 0 970 900 B1**
(45) Veröffentlichungstag und Bekanntmachung des Hinweises auf die Patenterteilung: **11.08.2004**
(21) Anmeldenummer: 99112105.4
(22) Anmeldetag: 23.06.1999
(51) Int. Cl.: B65G 60/00, B23P 19/00

(54) **Vorrichtung und Verfahren zur maschinellen Handhabung von Paletten**
Machine-assisted handling device and method for pallets
Dispositif et méthode de manutention mécanisé pour palettes

(30) Priorität: 09.07.1998 DE 29812106 U
(43) Veröffentlichungstag der Anmeldung: 12.01.2000
(73) Patentinhaber: Grässlin Automationssysteme GmbH, 78112 St. Georgen (DE)
(72) Erfinder: King, Gabriel, 78098 Triberg (DE); Nagel, Engelbert, 78730 Lauterbach (DE)
(74) Vertreter: Raible, Hans, Dipl.-Ing.

(56) Entgegenhaltungen:
- EP-A- 0 230 157
- DE-A- 2 138 120
- DE-A- 3 437 004
- US-A- 4 462 741
- US-A- 4 687 403
- US-A- 5 096 369

## Beschreibung

Die Erfindung betrifft eine Vorrichtung zur maschinellen Handhabung von Paletten, mit den Merkmalen nach dem Oberbegriff des Patentanspruchs 1.

Bei einer derartigen Vorrichtung mit einem ersten Palettenlift über den die, mit abzuarbeitenden Werkstücken beladenen, Paletten antransportiert und einem zweiten Palettenlift mit dem die abgearbeiteten, leeren Paletten abtransportiert werden, und mit einem horizontal verschiebbar gelagerten Transportrahmen, der mit Palettengreifelementen zum lösbar kraftschlüssigen Fixieren mindestens einer Palette ausgestattet ist, der eine Palette von einem Palettenstapel entnimmt, zu einer Bearbeitungsstation führt und nach der Abarbeitung der in der Palette befindlichen Werkstücke die Palette auf einem Abstellplatz zu neuem Stapel aufgesetzt wird, ist es erforderlich, daß der Palettentransport zu und von einer Bearbeitungsstation schnellstmöglich d.h. ohne wesentliche Leerlaufzeiten bzw. Stillstandszeiten zwischen den einzelnen Palettenstationen verläuft. Dabei soll sichergestellt sein, daß die in der Abarbeitungsposition befindliche, Palette für den Zeitraum der Abarbeitung vom Horizontaltransport unbeaufschlagt ist.

Aus der DE-A-2 138 120, worauf der Oberbegriff des Anspruchs 1 basiert, ist eine Vorrichtung zum Be- und Entladen von Paletten mit Flaschenkästen oder Flaschenkartons bekannt, bestehend aus Palettenhubtisch mit mehrbahnigem Kastenförderer, über denen ein, mit Kastenschichten-Greiferköpfen bestückter, Wagen hin- und herfahrbar ist, wobei beiderseits des Endstückes des mehrbahnigen Kastenförderers je ein unabhängig vom anderen steuerbarer Palettenhubtisch vorgesehen ist, und der Wagen in Richtung seiner Verfahrbarkeit quer zu der Förderrichtung des Kastenförderers zwei vollständige Kastenschichten-Greiferköpfe mit voneinander unabhängig steuerbaren Greiferelementen aufweist und die Abstände der beiden Kastenschichten-Greiferköpfe des Wagens voneinander den Abständen des Kastenförderendstücks von jedem der beiden Palettenhubtische entsprechen.

Diese bekannte Vorrichtung zum Palettieren und Entpalettieren von Flaschenkästen durch Übersetzen kompletter Kastenschichten auf mehrbahnige Kastenförderer weist einen verfahrbaren Wagen mit Greiferköpfen auf, bei dem die Greiferköpfe mit den Greifern, über den Kastenschichten, d.h. die Kastenschichten voll überdeckend, angeordnet sind.

Aus der DE-A 34 37 004 ist ein Fertigungsdurchlaufsystem bekannt, mit in Reihen angeordneten Fertigungseinheiten, welche mit einem Werkstückgreifer ver- und entsorgt werden, wozu dieser Rohlinge und Werkstücke Paletten entnimmt bzw. zuführt, die ihrerseits von einem Palettentransportgerät mit einem integrierten Palettenlift auf Bereitstell- und Abstellplätze im Nahbereich der Fertigungseinheiten entstappelt in die Reichweite des Werkstückgreifers gebracht, umgesetzt und nach Fertigbearbeitung aller Werkstücke auf einen Abstellplatz zu neuem Stapel aufgesetzt werden, und bei dem das Transportgerät mit, entlang einem ersten Palettenlift verschieblichen, Palettengreifelement und oberhalb der Oberkante der Stapel mit einer, für den Werkstückgreifer erreichbaren, höchsten Arbeitsebene ausgestattet ist, in welcher einzelne Paletten mitsamt den sie haltenden Palettengreifelementen überführbar bzw. von dort zurückholbar und über den/die Stapel hinwegführbar sind.

Dieses Fertigungsdurchlaufsystem ist mit dem Nachteil behaftet, daß die mit Rohlingen und Werkstücken beladene Palette, die mit einem horizontal verfahrbaren Transportrahmen an die Fertigungseinheit bzw. eine Bearbeitungsstation geführt wurde, während der Abarbeitungsphase nicht vom Transportrahmen abkoppelbar ist und dadurch der Abtransport der abgearbeitenen Palette und die Bereitstellung einer weiteren, mit Werkstücken beladenen, Palette erheblich Zeit in Anspruch nimmt.

Der Erfindung liegt die Aufgabe zugrunde, die Nachteile der beiden benannten bekannten Vorrichtungen zu beseitigen, und eine Vorrichtung zur maschinellen Handhabung von Paletten zu schaffen, bei dem der Abtransport einer abgearbeiteten Palette und das Greifen einer abzuarbeitenden Palette, unabhängig vom der Abarbeitung einer unter der Bearbeitungsstation befindlichen Palette erfolgen kann.

Diese Aufgabe wird mit den Merkmalen im kennzeichnenden Teil des Patentanspruchs 1 gelöst und in den Unteransprüchen sind weitere vorteilhafte Einzelheiten beansprucht. Ebenso wird die Aufgabe gelöst durch ein Verfahren gemäß Patentanspruch 4.

Vorteilhaft bei der neuen Vorrichtung ist nicht nur, daß zwischen den beiden Palettenliften in Höhe deren vertikaler oberer Endlage ein starr angeordneter Palettentisch zur Ablage einer, während der Abarbeitung vom Transportrahmen dynamisch abgekoppelten, Palette angeordnet ist, sondern auch, daß die Palettengreifelemente und der Transportrahmen räumlich unterhalb der Palettenebene angeordnet und die Lifttische der beiden Palettenlifte jeweils einseitig zu den jeweiligen Liftsäulen angeordnet sind, wobei die Liftsäulen mit den Lagermanschetten der Palettenlifte räumlich unter dem starr angeordneten Palettentisch wirksam angeordnet sind.

Ein weiterer Vorteil der neuen Vorrichtung ist, daß die im Transportrahmen vorgesehenen Palettengreifelemente unabhängig von der Abarbeitung der Palette zu öffnen und zu schließen sind.

Außerdem ist von Vorteil, daß den beiden Palettenlifte für den An- bzw. Abtransport von Paletten oder von Palettenstapeln bis zu drei jeweils rechtwinkelig zueinander angeordnete Rollenförderer funktionskonform benachbart angeordnet sind.

Ein Ausführungsbeispiel der neuen Vorrichtung ist in den Zeichnungen dargestellt und wird im folgenden näher erläutert. Es zeigen
- Fig. 1: eine schaubildliche Draufsicht auf die Vorrichtung,
- Fig. 2: eine schaubildliche Seitenansicht auf die Vorrichtung nach Fig. 1, mit einem Palettenstapel auf einem Palettenlift in der Funktionsstellung 'abzuarbeitende Palette vom Transportrahmen übernommen',
- Fig. 3: eine Draufsicht auf die Vorrichtung in der Funktionsdarstellung des Transportrahmens und der Palette, gemäß der Fig. 2,
- Fig. 4: eine schaubildliche Seitenansicht auf die Vorrichtung nach Fig. 1 in der Funktionsstellung 'Palette zur Abarbeitung auf dem Palettentisch, Transportrahmen über dem Palettentisch und dem Palettenlift zur Palettenabtransportstation',
- Fig. 5: eine schaubildliche Seitenansicht auf die Vorrichtung nach Fig. 1 in der Funktionsstellung 'Palette zur Abarbeitung auf dem Palettentisch, Transportrahmen über dem Palettentisch und dem Palettenlift mit werkstückbeladenen Paletten' und
- Fig. 6: eine schaubildliche Seitenansicht auf die Vorrichtung nach Fig. 1 in der Funktionsstellung 'Palette zur Abarbeitung auf dem Palettentisch, Transportrahmen über dem Palettentisch und mit abgearbeiteter Palette über dem Palettenlift zur Palettenabtransportstation'.

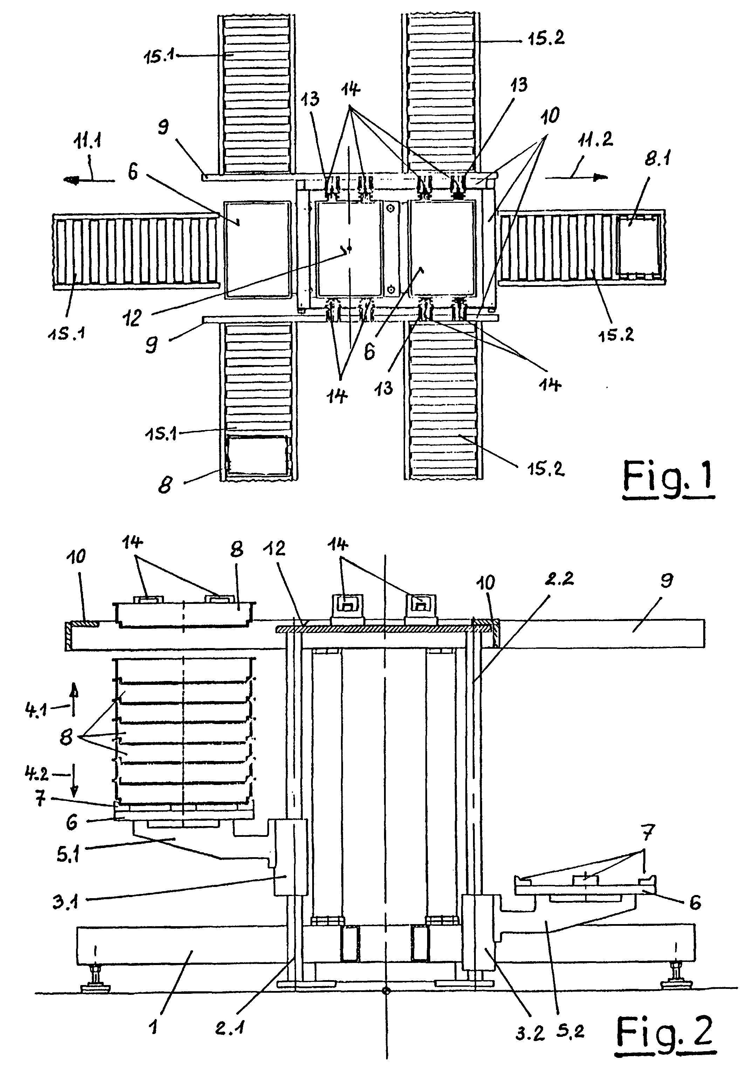

Die, in den Fig. 1 bis 6 dargestellte, Vorrichtung besteht im wesentlichen aus dem Vorrichtungsgestell 1, den zwei Liftsäulen 2.1 und 2.2 und den beiden spiegelbildlich einander benachbart angeordneten, einseitig, mittels der Lagermanschetten 3.1 und 3.2 auf der jeweiligen Liftsäule 2.1 bzw. 2.2 gelagerten, in den Pfeilrichtungen 4.1 und 4.2 vertikal verfahrbaren, beiden Palettenliften 5.1 und 5.2., die im jeweiligen Randbereich beider Lifttische 6 mit Fixierelementen 7 zur Lagenfixierung der Paletten 8 bzw. eines entsprechenden Stapels mit Paletten 8 versehen sind.

9 kennzeichnet eine horizontal verlaufende Führung, beispielsweise einen Rollgang, in der ein Transportrahmen 10 horizontal in den Pfeilrichtungen 11.1 und 11.2 verschiebbar gelagert ist. Auf der Höhe der Führung 9 bzw. des Transportrahmens 10 ist räumlich symmetrisch zwischen den beiden Palettenliften 5.1 und 5.2 ein Palettentisch 12 zur Ablage einer abzuarbeitenden Palette 8 angeordnet. Die räumliche Lage dieses Palettentisches 12 ist zweckmäßigerweise einer sogenannten, nicht näher dargestellten, Palettenabarbeitungs- bzw. Montagestation 16 benachbart angeordnet.

Der Transportrahmen 10 ist mit Rollen 13 ausgestattet. Außerdem sind im Randbereich des Transportrahmens 10, insbesondere einander gegenüberliegend, Palettengreifelemente 14 angeordnet, zur Fixierung und lösbar kraftschlüssigen Befestigung von Paletten 8. Der Transportrahmen 10 ist dabei räumlich derart bemessen, daß mindestens zwei Paletten 8, 8.1 in Transportrichtung 11.1 hintereinander liegend angeordnet sind, so, daß jeweils diese beiden Paletten 8 synchron zueinander funktionskonform vom Transportrahmen 10 verschiebbar sind.

In der Fig. 1 bezeichnet 15.1 und 15.2 sogenannte Rollenförderer. Dabei dienen die Rollenförderer 15.1 für den Antransport der mit Werkstücken beladenen Paletten 8 bzw. von entsprechenden Palettenstapeln, während die Rollenförderer 15.2 für den Abtransport abgearbeiteter, d.h. leerer Paletten 8.1 bzw. eines entsprechenden Palettenstapels vorgesehen sind.

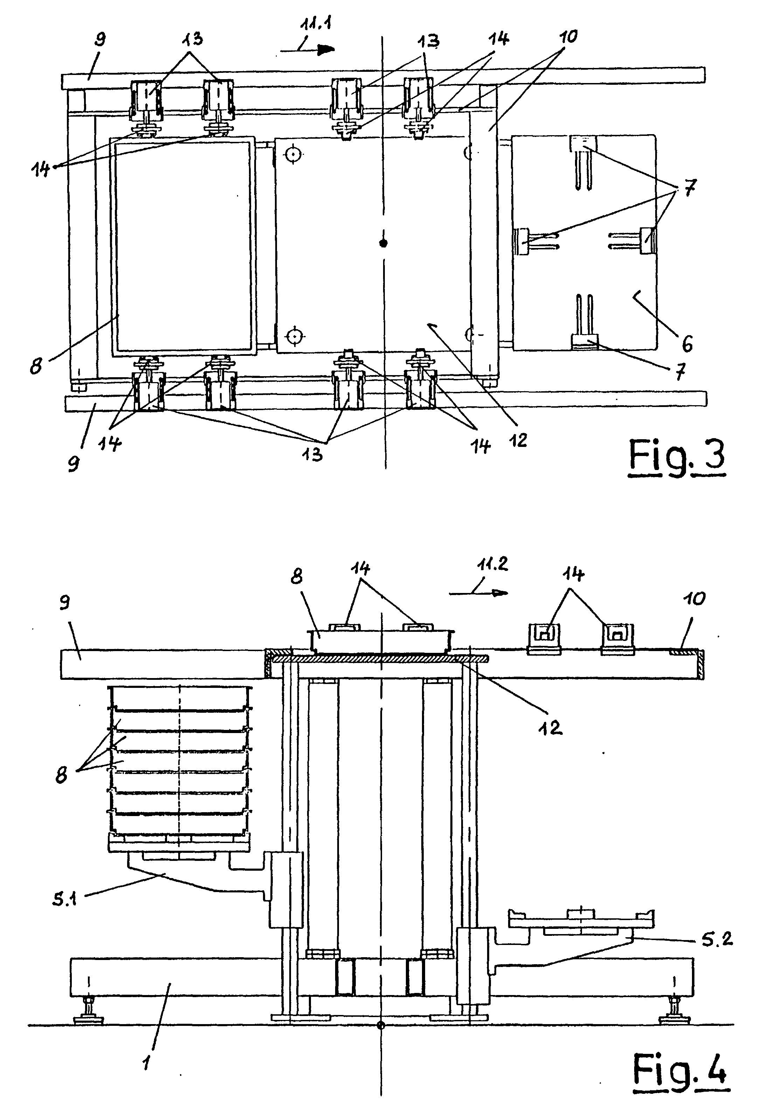

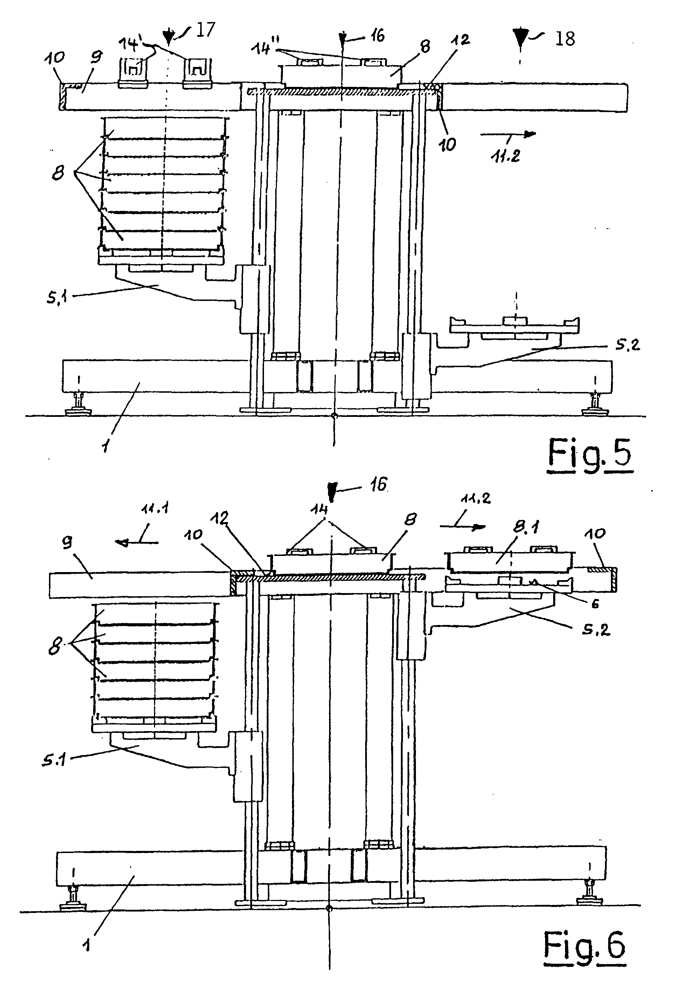

In den Fig. 2 und 3 befindet sich der Transportrahmen 10 in einer Position zur Übernahme einer mit Werkstücken beladenen Palette 8 vom Palettenstapel (erste Position der Palette 8). 14 bezeichnet die am Transportrahmen 10 vorgesehenen Palettengreifelemente, die nach der Übernahme einer Palette 8 lösbar kraftschlüssig lagefixierend auf die Palette 8 wirken. 9 kennzeichnet die Führung und 12 bezeichnet den Palettentisch zwischen den beiden Palettenliften 5.1 und 5.2. Die linken Palettengreifelemente 14 werden auch als erste Palettengreifelemente 14' bezeichnet, und die rechten Palettengreifelemente als zweite Palettengreifelemente 14", vgl. Fig. 5.

Der Transportrahmen 10 wird nunmehr funktionskonform in Pfeilrichtung 11.1 so weit verschoben, bis die Palette 8 die Bearbeitungsposition 16 über dem Palettentisch 12, gemäß der Fig. 4, erreicht hat.

In der Bearbeitungsposition 16 wird die Palette 8 dynamisch, durch das Öffnen der Palettengreifelemente 14, vom Transportrahmen 10 abgekoppelt und auf dem Palettentisch 12, zur Abarbeitung der nicht näher dargestellten Werkstücke, abgestellt, wie aus der Fig. 4 ersichtlich ist.

Der Transportrahmen 10 fährt unverzüglich leer zurück in eine Position, gemäß der Darstellung nach Fig. 5, zur erneuten Übernahme einer beladenen Palette 8. Der Transportrahmen 10 verharrt nunmehr in der Position gemäß der Fig. 5 bis die Palette 8 abgearbeitet ist. Sobald diese Palette 8 abgearbeitet ist, wird sie von den benachbarten Palettengreifelementen 14 kraftschlüssig fixiert. Der Transportrahmen 10 setzt sich unverzüglich in Pfeilrichtung 11.2 in Bewegung und transportiert die abgearbeitete Palette 8.1 über den Lifttisch 6 (zweite Position der Palette 8.1) und koppelt sie dynamisch vom Transportrahmen 10 ab. Gleichzeitig wird die mit der Palette 8.1 in Reihe liegende beladene Palette 8 vom Transportrahmen 10 auf den Palettentisch 12 geführt und dort zur Abarbeitung durch ein nicht näher dargestelltes Bearbeitungssystem dynamisch abgekoppelt. Nach der Abkopplung der Palette 8.1 fährt der Transportrahmen 10 unverzüglich, in Pfeilrichtung 11.1, in eine Position gemäß der Fig. 5 zurück zur Übernahme einer weiteren mit Werkstücken beladenen Palette 8. Die erste Position ist in Fig. 5 mit 17, die zweite Position mit 18 bezeichnet.

Es liegt im Rahmen der Erfindung, daß auch leere Paletten 8.1 an- oder abtransportierbar sind, um in der Bearbeitungsstation 16 befüllt zu werden.

In Abänderung des allgemeinen Erfindungsgedankens ist es vorgesehen, daß anstelle des Transportrahmens 10 zwei synchron zueinander bewegbare Transportarme, die, mit entsprechenden Palettengreifelementen ausgestattet, vorgesehen sind, mittels derer zwei Paletten funktionskonform und synchron zueinander gleichzeitig transportierbar sind.

## Patentansprüche

1. Vorrichtung zur maschinellen Handhabung von Paletten (8, 8.1), mit einem ersten Palettenlift (5.1), einem zweiten Palettenlift (5.2) und einer, zwischen den beiden Palettenliften (5.1 und 5.2) wirksam angeordneten. Bearbeitungsstation mit einer horizontal verlaufend angeordneten Führung (9), mit einem, auf der Führung (9) horizontal verschiebbar gelagerten, Transportrahmen (10), der für mindestens zwei, in Transportrichtung (4.1) hintereinander liegend angeordnete Paletten (8, 8.1) ausgebildet ist, wobei die Paletten (8 und 8.1) synchron zueinander vom Transportrahmen (10) verschiebbar sind, wobei der Transportrahmen (10) mit Palettengreifelementen (14) zum lösbar kraftschlüssigen Fixieren der Paletten (8, 8.1) ausgestattet ist, wobei die Palettengreifelemente (14) räumlich den Seiten der Paletten (8, 8.1) benachbart wirksam angeordnet sind, zum Transportieren der Paletten (8 bzw. 8.1) vom ersten Palettenlift (5.1) in die Position der Bearbeitungsstation und/oder von der Bearbeitungsstation zum zweiten Palettenlift (5.2), insbesondere für Montageautomaten, wobei die Führungen (2.1 und 2.2) der Palettenlifte (5.1 und 5.2) räumlich unter dem Palettentisch (12) wirksam angeordnet sind **dadurch gekennzeichnet, daß** zwischen den beiden Palettenliften (5.1 und 5.2) in Höhe deren vertikaler oberen Endlage und symmetrisch zwischen den beiden Palettenliften (5.1 uns 5.2), ein starr am Vorrichtungsgestell (1) zur Begrenzung der Bewegung des Transportrahmens (10) angeordneter Palettentisch (12) zur Ablage einer, während der Abarbeitung vom Tranporfrahmen (10) dynamisch abgekoppelten, Palette (8) angeordnet ist.

2. Vorrichtung nach Anspruch 1, **dadurch gekennzeichnet, daß** die am Transportrahmen vorgesehenen Palettengreifelemente (14) unabhängig von der Abarbeitung einer Palette (8) zu öffnen und zu schließen sind.

3. Vorrichtung nach Anspruch 1 und 2, **dadurch gekennzeichnet, daß** jedem der beiden Plattenlifte (5.1 bzw. 5.2) für den Antransport bzw. den Abtransport von Paletten (8) oder von Palettenstapeln bis zu drei jeweils rechtwinklig zueinander angeordnete Rollenförderer (15.1 bzw. 15.2) funktionskonform benachbart angeordnet sind.

4. Verfahren zur maschinellen Handhabung von Paletten (8), welche von einer ersten Position über eine Bearbeitungsposition (16) zu einer zweiten Position transportiert werden,
mit ersten und zweiten Palettengreifelementen (14),
welches Verfahren folgende Schritte aufweist:
a) Eine erste Palette (8) wird vertikal in die erste Position verfahren;
b) die ersten Palettengreifelemente (14) werden mit der daran lösbar kraftschlüssig fixierten ersten Palette (8) von der ersten Position zu der Bearbeitungsposition (16) verschoben, und die zweiten Palettengreifelemente (14) werden synchron hierzu von der Bearbeitungsposition (16) zu der zweiten Position verschoben;
c) die lösbar kraftschlüssige Fixierung der ersten Palette (8) an den ersten Palettengreifelementen (14) wird gelöst, und die erste Palette (8) wird abgestellt;
d) die ersten Palettengreifelemente (14) werden ohne die erste Palette (8) von der Bearbeitungsposition (16) zu der ersten Position verschoben, die zweiten Palettengreifelemente (14) werden synchron hierzu von der zweiten Position zu der Bearbeitungsposition (16) verschoben, und die nach oben offene erste Palette (8) wird in der Bearbeitungsposition (16) be- oder entladen;
e) die erste Palette (8) wird durch die zweiten Palettengreifelemente (14) lösbar kraftschlüssig fixiert, die zweiten Palettengreifelemente (14) werden mit der ersten Palette (8) von der Bearbeitungsposition (16) zu der zweiten Position verschoben, und die ersten Palettengreifelemente (14) werden synchron hierzu von der ersten Position zu der Bearbeitungsposition (16) verschoben;
f) die erste Palette (8) wird aus der zweiten Position vertikal verfahren.

5. Verfahren nach Anspruch 4,
welches zusätzlich folgende Schritte aufweist:
b1) In Schritt b) wird durch die zweiten Palettengreifelemente (14) eine zweite Palette (8) von der Bearbeitungsposition (16) zu der zweiten Position transportiert;
e1) In Schritt e) wird durch die ersten Palettengreifelemente (14) eine dritte Palette von der ersten Position zu der Bearbeitungsposition (16) transportiert.

## Claims

1. Device for machine handling of pallets (8, 8.1), comprising a first pallet lift (5.1), a second pallet lift (5.2) and a processing station which is effectively arranged between the two pallet lifts (5.1 and 5.2) and comprises a guide (9) arranged running horizontally, and a conveying frame (10) which is mounted displaceable horizontally on the guide (9) and is designed for at least two pallets (8, 8.1) arranged one behind the other in the conveying direction (4.1), wherein the pallets (8 and 8.1) are displaceable in synchronism with one another by the conveying frame (10), wherein the conveying frame (10) is equipped with pallet gripping elements (14) for detachable force-locking fixing of the pallets (8, 8.1), wherein the pallet gripping elements (14) are effectively arranged spatially neighbouring the sides of the pallets (8, 8.1), for conveying the pallets (8 and 8.1) from the first pallet lift (5.1) to the position of the processing station and/or from the processing station to the second pallet lift (5.2), in particular for automatic assembly systems, wherein the guides (2.1 and 2.2) of the pallet lifts (5.1 and 5.2) are effectively arranged spatially under the pallet table (12), **characterised in that** a pallet table (12) arranged rigidly on the mounting framework (1) of the device for limiting the movement of the conveying frame (10) is arranged between the two pallet lifts (5.1 and 5.2) and at the level of the vertical upper end position thereof and symmetrically between the two pallet lifts (5.1 and 5.2) for receiving a pallet (8) dynamically decoupled from the conveying frame (10) during the processing.

2. Device according to claim 1, **characterised in that** the pallet gripping elements (14) provided on the conveying frame are adapted to be opened and closed independently of the processing of a pallet (8).

3. Device according to claim 1 and 2, **characterised in that** up to three roller conveyors (15.1 and 15.2) arranged at right angles to one another are arranged adjacent to each of the two pallet lifts (5.1 and 5.2) for conveying pallets (8) or stacks of pallets in or out and in conformity with the function thereof.

4. Method for machine handling of pallets (8) which are conveyed from a first position via a processing position (16) to a second position, with first and second pallet gripping elements (14), which method comprises the following steps:
a) a first pallet (8) is moved vertically to the first position;
b) the first pallet gripping elements (14) are moved, together with the first pallet (8) fixed thereto in a detachable force-locking manner, from the first position to the processing position (16), and in synchronism therewith the second pallet gripping elements (14) are moved from the processing position (16) to the second position;
c) the detachable force-locking fixture of the first pallet (8) to the first pallet gripping elements (14) is released and the first pallet (8) is set down;
d) the first pallet gripping elements (14) are moved without the first pallet (8) from the processing position (16) to the first position, and in synchronism therewith the second pallet gripping elements (14) are moved from the second position to the processing position (16), and the first pallet (8) open at its upper side is loaded or unloaded in the processing position (16);
e) the first pallet (8) is fixed in a detachable force-locking manner by the second pallet gripping elements (14), the second pallet gripping elements (14) are moved with the first pallet (8) from the processing position (16) to the second position, and in synchronism therewith the first pallet gripping elements (14) are moved from the first position to the processing position (16);
f) the first pallet (B) is moved vertically out of the second position.

5. Method according to claim 4, which additionally comprises the following steps:
b1) in step b) a second pallet (8) is conveyed by the second pallet gripping elements (14) from the processing position (16) to the second position;
e1) in step e) a third pallet is conveyed by the first pallet gripping elements (14) from the first position to the processing position (16).

## Revendications

1. Dispositif de manutention mécanisée de palettes (8, 8.1), avec un premier élévateur de palettes (5.1), un deuxième élévateur de palettes (5.2) et un poste de traitement disposé opérationnellement entre les deux élévateurs de palettes (5.1 et 5.2), avec un guide (9) disposé en s'étendant horizontalement, avec un bâti de transport (10) monté à translation horizontale sur le guide (9) et conçu pour au moins deux palettes (8, 8.1) disposées en succession dans la direction de transport (4.1), les palettes (8 et 8.1) pouvant être déplacées en synchronisme par le bâti de transport (10), le bâti de transport (10) étant équipé d'éléments preneurs de palettes (14) pour la fixation en position des palettes (8, 8.1) par blocage amovible, les éléments preneurs de palettes (14) étant opérationnellement disposés en étant spatialement voisins des côtés des palettes (8, 8.1), pour transporter les palettes (8, 8.1) du premier élévateur de palettes (5.1) à la position du poste de traitement et/ou du poste de traitement au deuxième élévateur de palettes (5.2), notamment pour des automates de montage, les guides (2.1 et 2.2) des élévateurs de palettes (5.1 et 5.2) étant opérationnellement disposés spatialement en dessous du plateau à palettes (12), **caractérisé en ce qu'**est disposé, entre les deux élévateurs de palettes (5.1 et 5.2), à hauteur de leur position finale supérieure verticale et symétriquement entre les deux élévateurs de palettes (5.1 et 5.2), un plateau à palettes (12) qui est disposé rigidement sur le châssis (1) du dispositif pour limiter le mouvement du bâti de transport (10) et qui sert à y déposer une palette (8) désaccouplée dynamiquement du bâti de transport (10) pendant le traitement.

2. Dispositif selon la revendication 1, **caractérisé en ce que** les éléments preneurs de palettes (14) prévus sur le bâti de transport peuvent être ouverts et fermés indépendamment du traitement d'une palette (8).

3. Dispositif selon les revendications 1 et 2, **caractérisé en ce que** jusqu'à trois transporteurs à rouleaux (15.1 ou respectivement 15.2), respectivement disposés perpendiculairement entre eux, sont disposés, en conformité au fonctionnement prévu, au voisinage de chacun des deux élévateurs de palettes (5.1 ou respectivement 5.2) pour le transport d'amenée ou respectivement le transport d'évacuation de palettes (8) ou de piles de palettes.

4. Procédé de manutention mécanisée de palettes (8), qui sont transportées d'une première position à une deuxième position en passant par une position de traitement (16),
avec des premiers et deuxièmes éléments preneurs de palettes (14),
lequel procédé présente les étapes suivantes :
a) une première palette (8) est déplacée verticalement dans la première position ;
b) les premiers éléments preneurs de palettes (14) sont, avec la première palette (8) qui y est fixée en position par blocage amovible, déplacés de la première position à la position de traitement (16), et les deuxièmes éléments preneurs de palettes (14) sont déplacés, en synchronisme avec les premiers, de la position de traitement (16) à la deuxième position ;
c) la fixation en position par blocage amovible de la première palette (8) aux premiers éléments preneurs de palettes (14) est défaite, et la première palette (8) est déposée ;
d) les premiers éléments preneurs de palettes (14) sont, sans la première palette (8), déplacés de la position de traitement (16) à la première position, les deuxièmes éléments preneurs de palettes (14) sont déplacés, en synchronisme avec les premiers, de la deuxième position à la position de traitement (16), et la première palette (8) ouverte vers le haut est chargée ou déchargée à la position de traitement (16) ;
e) la première palette (8) est fixée en position par blocage amovible par les deuxièmes éléments preneurs de palettes (14), les deuxièmes éléments preneurs de palettes (14) sont, avec la première palette (8), déplacés de la position de traitement (16) à la deuxième position, et les premiers éléments preneurs de palettes (14) sont déplacés, en synchronisme avec les deuxièmes, de la première position à la position de traitement (16) ;
f) la première palette (8) est déplacée verticalement à partir de la deuxième position.

5. Procédé selon la revendication 4, qui présente les étapes supplémentaires suivantes :
b1) à l'étape b), une deuxième palette (8) est transportée par les deuxièmes éléments preneurs de palettes (14) de la position de traitement (16) à la deuxième position ;
e1) à l'étape e), une troisième palette est transportée par les premiers éléments preneurs de palettes (14) de la première position à la position de traitement (16).
